# EUROPEAN PATENT SPECIFICATION

(11) **EP 4 424 474 B1**
(45) Date of publication and mention of the grant of the patent: **15.04.2026**
(21) Application number: 23159502.6
(22) Date of filing: 01.03.2023
(51) Int. Cl.: B25J 1/04

(54) **GRIPPER DEVICE**
GREIFVORRICHTUNG
DISPOSITIF DE PRÉHENSION

(43) Date of publication of application: 04.09.2024
(73) Proprietor: Husqvarna AB, 561 82 Huskvarna (SE)
(72) Inventor: Kley, Wolfgang, 88480 Achstetten (DE)
(74) Representative: Finkele, Rolf

(56) References cited:
- JP-A- 2002 154 075
- US-B1- 7 344 171

## Description

### TECHNICAL FIELD

The present disclosure relates to a gripper device. More specifically, the present disclosure relates to the gripper device having a first coupling structure and a second coupling structure configured to attach an accessory element to a gripper element.

### BACKGROUND

A gripper device is a tool that may provide an easy way to pick up waste and refuse that is easy on the back of a user and/ or disposed beyond the reach of the user. The gripper device may allow simple, comfortable gripping without troublesome bending over.

The gripper device may generally include a handle and a gripper head spaced apart from each other by a shaft. The gripper head may include two gripper elements that may be actuated by pressing a lever, or a button disposed on the handle. In the known gripper devices, the gripper device may additionally include an accessory element such as, a rake, a shovel, a broom, and the like to improve the versatility of the gripper device.

An example of a gripper device with an accessory element is provided in United States Patent Application US 2017/0027154 A1 (hereinafter referred to as '154 reference). The ' 154 reference provides a hand-held herbicide delivery device for targeted application of herbicide to a targeted plant. The herbicide delivery device includes a shaft and two spring arms located proximate a first end of the shaft. The two spring arms move between an open position and a closed position. The two spring arms are each affixed with a sponge using connectors, preferably snap-in connectors, such that when the two spring arms are in a closed position, the two sponges are brought into close proximity with each other. The two sponges are adapted to carry an herbicide. Herbicide is applied to the targeted plant by positioning the two spring arms in the open position such that they surround the targeted plant and moving a hand-actuated trigger from an extended position to a retracted position so that flexible cables move the two spring arms into the closed position, with the two sponges directly contacting at least a portion of the targeted plant.

A further example of a gripper device is described in US patent US 7,344,171 B1 (hereinafter referred to as '171 reference). The '171 reference discloses a hand-held device for gripping objects positioned beyond arm's length. The device comprises a rod with a handle assembly at one end and a gripping assembly at an opposite end thereof. The gripping assembly comprises a pair of jaws movable relative to each other between at least an unclamped position and at least a first clamped position. Each of the jaws includes a gripping portion removably connected thereto. An end effector is substantially hollow and provided with female locking interface portions. The gripping portion is provided with corresponding male interlocking interface portions. The mating of the gripping portion with the end effector is achieved through the insertion of a stem of the gripping portion into a bore of the end effector. Tabs of the gripping portion initially fit the corresponding geometry of the bore, however, the gripping portion is not fully seated in this orientation. A user twists the gripping portion in a counterclockwise fashion until the tabs fully engage radiused slots, and detents are fully seated in recesses. Patent document JP2002154075A also discloses examples of a gripper device.

### SUMMARY OF THE INVENTION

In view of the above, it is an objective of the present invention to solve or at least reduce the drawbacks discussed above. The objective is at least partially achieved by an improved gripper device.

According to an aspect of the present invention, the gripper device includes a shaft, a gripper head attached to one side of the shaft, and a handle attached to another end of the shaft opposite to the gripper head. The handle is configured to actuate the gripper head. The gripper head includes two gripper elements that are configured to interact with each other for gripping. Further, at least one of the two gripper elements includes a first coupling structure and a second coupling structure. The first coupling structure and the second coupling structure are configured to removably couple an accessory element to the gripper element. The first coupling structure is configured to position the accessory element relative to the gripper element in a defined manner. The first coupling structure is further configured to rotate the accessory element relative to the gripper element. Further, the second coupling structure is configured to immovably lock the accessory element relative to the gripper element. The gripper device is characterized in that the first coupling structure and the second coupling structure are formed separately from each other, wherein one of the first coupling structure and the second coupling structure is formed on a front end of the gripper element and another one of the first coupling structure and the second coupling structure is formed on a back end of the gripper element.

Thus, the present disclosure provides a versatile gripper device that is ergonomic, easy to use, efficient, and simple in construction. The gripper device performs conventional applications, such as, picking up objects, effectively and efficiently. Additionally, the gripper device removably couples with the accessory element to further increase the use case of the gripper device. For example, the gripper device may be used for raking the lawn as well. Further, the first coupling structure and the second coupling structure may provide easy, quick, secure, removable, and tool-less coupling between the gripper device and the accessory element.

The first coupling structure is configured to position the accessory element relative to the gripper element in the defined manner according to the present invention. This may denote that the accessory element is positioned in a definite position relative to the gripper element. In other words, the position of the accessory element relative to the gripper element is fixed.

According to an exemplary embodiment of the invention, the gripper device may have an adjustable length. The adjustable length of the gripper device may be advantageously used to precisely adjust the length of the gripper device, for example, to reach relatively far objects. Particularly, some objects may need an extended length of the gripper device whereas objects that are near may require a shorter length of the gripper device. Thus, the gripper device with adjustable length and the added accessory element may be able to ergonomically perform various applications in addition to gripping or picking objects, at different distances relative to the handle of the gripper device.

According to an exemplary embodiment of the invention, the shaft may include a first shaft section and a second shaft section such that the second shaft section may be removably coupled to the first shaft section. Further, the second shaft section may be allowed to telescope in and out of the first shaft section. In other words, the shaft of the gripper device may have variable length and by adjusting the length of the shaft, the length of the gripper device may be varied.

According to an exemplary embodiment of the invention, the handle may include a trigger element. The trigger element may be configured to actuate the gripper head. The trigger element may be a switch, a button, a lever, or any other ergonomically suitable, and easy to operate trigger element.

According to an exemplary embodiment of the invention, the handle may include a grip portion such that the grasping of the grip portion of the handle may provide better hold and safe working of the gripper device. The material used for the grip portion may preferably be, but need not necessarily, PVC or nitrile rubber, or any other plastic or polymer to suit application needs.

According to an exemplary embodiment of the invention, each of the two gripper elements include the first coupling structure and the second coupling structure. Further, each of the two gripper elements is configured to removably couple a respective accessory element to the gripper element. The two gripper elements by virtue of the respective first coupling structure and the second coupling structure may be removably coupled to similar or different accessory elements. The similar or different accessory elements may work in combination to perform an application. For example, one accessory element may be an open collection box, and the other accessory element may be a sweeping device. The open collection box may be configured to collect the debris, animal wastes, and the like swept by the sweeping device.

According to the invention, the first coupling structure and the second coupling structure are formed separately from each other. One of the first coupling structure and the second coupling structure is formed on a front end of the gripper element, and another one of the first coupling structure and the second coupling structure is formed on a back end of the gripper element. Either of the first coupling structure and the second coupling structure may advantageously be formed at the front end of the gripper element. Further, either of the first coupling structure and the second coupling structure may advantageously be formed at the back end of the gripper element. The positions of the first coupling structure and the second coupling structure may depend upon the design of the accessory element such that the first coupling structure and the second coupling structure may be able to removably couple with the corresponding coupling structures provided with the accessory element.

Further, the front end and the back end of the gripper element are spaced apart from each other on the gripper element. The front end is defined as the end of the gripper element which is further away from the handle of the gripper device and the back end of the gripper element is defined as the end of the gripper element which is nearer to the handle of the gripper device than the front end.

According to an exemplary embodiment of the invention, the first coupling structure is configured to position the gripper element and the accessory element relative to each other such that a lateral position between the gripper element and the accessory element is defined. Further, a lateral movement between the gripper element and the accessory element is substantially inhibited. The first coupling structure provides removable, rotatable, and secure positioning between the gripper element and the accessory element such that a sideway/lateral movement between the gripper element and the accessory element is substantially inhibited.

The lateral position between the gripper element and the accessory element according to the present invention may be defined as the position the gripper element and the accessory element relative to each other seen in a direction extending between a right end and a left end of the gripper element, wherein the right end and the left end are each interconnecting the front end and the back end of the gripper element. Particularly, the front end and the right end respectively the left end form a substantially 90° angle between each other. Accordingly, the back end and the right end respectively the left end form a substantially 90° angle between each other. According to an exemplary embodiment of the invention, the gripper element is formed such that the right end and the left end are equidistant relative to the handle. The right end and the left end may form respective lateral sides of the gripper element. Figuratively described, the front end, the right end, the back end and the left end together form the edges/sides of the gripper element.

The lateral movement between the gripper element and the accessory element according to the present invention may be defined as the movement of either of the gripper element and the accessory element along a direction parallel to the front end respectively the back end. Additionally, the lateral movement according to the present invention may be defined as the movement along a direction perpendicular to the right end respectively the left end.

According to an exemplary embodiment of the invention, the first coupling structure includes two lateral grooves, in particular with a round cross-section. Each of the two lateral grooves extend inwardly from one of two opposing lateral sides of the gripper element. Further, a recess is formed to connect the two lateral grooves. Further, the two lateral grooves are configured to insert a respective lateral protrusion of the accessory element. Further, the two lateral grooves are configured to rotate the accessory element relative to the gripper element in the defined manner. Further, the recess is configured to define a lateral position of the accessory element relative to the gripper element. The first coupling structure with two lateral grooves with round cross-section may allow removable and rotatable coupling between the gripper element and the accessory element. The two lateral grooves may be defined as the grooves formed on each of the two opposing sides of the gripper element that are particularly equidistant relative to the handle. Further, the two opposing sides of the gripper element that are positioned on two opposing sides relative to the handle are defined as the two opposing lateral sides. The two opposing sides are interchangeably used as the two opposing lateral sides in the present disclosure. One of the two opposing lateral sides comprises the left end and another one of the two opposing lateral sides comprises the right end.

Further, the recess is formed in the gripper element to connect the two lateral grooves. The recess may be defined as a clearance respectively a free space that extends between the two lateral grooves. The recess supports the accessory element such that the two lateral protrusions extending from the accessory element are inserted in the respective lateral grooves. The two lateral protrusions may be defined as the protrusions that extend in the direction perpendicular to the direction of the two opposing lateral sides of the gripper element. Each of the lateral protrusions extends in a direction parallel to the front end respectively the back end of the gripper element. Further, the two lateral protrusions when inserted in the respective lateral grooves may allow defined respectively restricted rotation of the accessory element relative to the gripper element.

According to an exemplary embodiment of the invention, the second coupling structure includes a snap protrusion configured to provide a counter bearing for a corresponding snap lever of the accessory element. The snap protrusion is further configured to immovably lock the accessory element relative to the gripper element. The snap protrusion may be a male coupling element that is inserted into the snap lever or a female coupling element for quick, removable, and immovable coupling between the gripper element and the accessory element.

According to an exemplary embodiment of the invention, the gripper device includes a storage clamp, in particular mounted to the shaft. The storage clamp is configured to removably couple the accessory element for storing during non-use. The storage clamp includes two opposite storage elements. Each of the two storage elements includes a further first coupling structure and a further second coupling structure such that each of the two storage elements is configured to store the accessory element during non-use. The further first coupling structure is formed substantially similar to the first coupling structure and the further second coupling structure is formed substantially similar to the second coupling structure. In particular, the storage clamp is configured to be a separate and removable part.

The storage clamp may be mounted anywhere along the length of the shaft without compromising with the ergonomics of the gripper device. The storage clamp may be a cost-effective substitute for a separate storage rack generally used for storing the at least on accessory element. Additionally, the storage clamp may allow easy, reliable and convenient storage and take along of the accessory elements during non-use.

The storage clamp may prevent misplacement of the accessory element as the accessory element may be mounted straight to the storage clamp after use. According to a further aspect of the present invention, more than one storage clamp may be mounted to the shaft as per the requirement along the length of the shaft.

According to a further aspect of the present invention, a gripper assembly is provided. The gripper assembly includes an above-described gripper device, and at least one accessory element, in particular two accessory elements. The at least one accessory element is removably coupled to at least one of the two gripper elements. The gripper assembly due to the addition of the at least one accessory element to the gripper device may be useful for picking up and keep collected different items. For example, the conventional gripper device may be able to pick up one small item, like a branch, from a lawn surface, whereas the gripper assembly of the present invention may include the open collection box as one of the accessory element associated with one of the gripper elements and further include rake as the other accessory element associated with other gripper element such that the movement of the rake may sweep in a plurality of leaves into the open collection box for picking up and disposing the plurality of leaves.

According to an exemplary embodiment of the invention, the gripper assembly may be made up of a relatively lightmaterial (such as plastic) which allows the gripper assembly to be light in weight and cost effective. Furthermore, the light weight of the gripper assembly improves the ergonomics of the gripper assembly.

According to an exemplary embodiment of the invention, the gripper assembly may be manufactured using a light weight and durable material such as polyethylene (PE), polyvinyl chloride (PVC), polypropylene (PP), polystyrene (PS), polylactic acid (PLA), polycarbonate (PC), acrylic (PMMA), and the like. However, the gripper assembly may be manufactured using any other material, without limiting the scope of the present disclosure.

According to an exemplary embodiment of the invention, the at least one accessory element includes a rake, a soft fan rake, a shovel and/or a broom. The at least one accessory element, in particular two accessory elements may be selected as per the requirement of the application and may be removably coupled to the two gripper elements during use.

According to an exemplary embodiment of the invention, one gripper element may be removably coupled with a shovel whereas the other gripper element may be removably coupled with a broom. According to an exemplary embodiment of the invention, one gripper element may be removably coupled with an open collection box whereas the other gripper element may be removably coupled with a broom. According to an exemplary embodiment of the invention, one gripper element may be removably coupled with a rake whereas the other gripper element may be removably coupled with a shovel. According to an exemplary embodiment of the invention, one gripper element may be removably coupled with a rake whereas the other gripper element may be removably coupled with another rake. According to an exemplary embodiment of the invention, one gripper element may be removably coupled with a soft fan rake whereas the other gripper element may be removably coupled with an open collection box or another soft fan rake.

According to an exemplary embodiment of the invention, the accessory element includes a third coupling structure configured to functionally interact with the first coupling structure of the gripper element such that the gripper element and the accessory element are positionable relative to each other in the defined manner, and such that the accessory element is rotatable relative to the gripper element. The accessory element further includes a fourth coupling structure configured to functionally interact with the second coupling structure of the gripper element such that the accessory element is immovably lockable relative to the gripper element. The third coupling structure and the fourth coupling structure of the accessory element respectively couples with the first coupling structure and the second coupling structure of the gripper element such that the accessory element and the gripper element are removably coupled with each other to form the gripper assembly.

According to an exemplary embodiment of the invention, the gripper assembly further includes a storage clamp being removably mounted to the shaft. The storage clamp may be removably mounted to the shaft anywhere along the length of the shaft such that the accessory elements being used with the gripper head may not face any interference from the accessory elements being stored on the storage clamp.

According to an exemplary embodiment of the invention, the storage clamp includes two opposite storage elements. Each of the two storage elements includes a further first coupling structure and a further second coupling structure. Further, the two storage elements are configured to store two accessory elements during non-use. The further first coupling structure is formed substantially similar to the first coupling structure and the further second coupling structure is formed substantially similar to the second coupling structure. Further, the further first coupling structure and the further second coupling structure of each of the two storage elements removably couples with the third coupling structure and the fourth coupling structure respectively of the two accessory elements to store the two accessory elements to the storage clamp or the two storage elements.

According to an exemplary embodiment of the invention, the third coupling structure includes two lateral protrusions, in particular includes a circular cross-section, each extending away from one of two opposing lateral sides of the accessory element. One of the two lateral protrusions extends from the right end respectively one lateral side of the gripper element and another of the two lateral protrusions extends from the left end respectively another lateral side of the gripper element. Each of the two lateral protrusions is configured to be insertable into a respective one of the two lateral grooves of the gripper element. The third coupling structure further includes a lateral positioning part configured to functionally interact with the recess of the gripper element.

The third coupling structure includes the lateral positioning part and the two lateral protrusions each extending from the two opposing lateral sides of the lateral positioning part. The lateral positioning part functionally interacts with the recess of the gripper element and the two lateral protrusions functionally interact with the two lateral grooves of the gripper element.

The lateral positioning part according to the present invention extends along a width of the recess, i.e., the lateral positioning part extends in a direction perpendicular to a plane of the two opposing lateral sides of the gripper element. In other words, the width of the lateral positioning part may be seen as an extension of the lateral positioning part in a lateral direction of the gripper element, wherein the lateral direction extends from the right end to the left end and vice versa respectively between the two opposing lateral sides.

Further, the two opposing lateral sides of the lateral positioning part are the two opposing sides of the third coupling structure that are positioned on two opposing sides from the handle of the gripper assembly.

According to an exemplary embodiment of the invention, the fourth coupling structure includes a snap lever configured to engage the snap protrusion of the gripper element. The snap protrusion may be a male coupling element that is inserted into the fourth coupling structure or a female coupling element for quick, removable, and immovable coupling between the gripper element and the accessory element. Alternatively, the snap lever may comprise a snap hook gripping a free end of the snap protrusion.

According to an exemplary embodiment of the invention, when the accessory element is removably coupled to the gripper element, the lateral positioning part is inserted into the recess. Further, each of the two lateral protrusions is inserted in a respective one of the two lateral grooves, and the snap lever is snap connected to the snap protrusion. The accessory element and the gripper element both include a set of elements that when functionally couple or engage with each other provides the removable coupling between the accessory element and the coupling element such that the gripper assembly is formed that may efficiently perform applications that may otherwise be performed separately by the rake, shovel, broom, and the like.

Before discussing the invention with the help of the drawings, the invention will be briefly discussed in general. A gripper assembly is provided that includes a snap coupling between the two gripper elements of the gripper device and the two accessory elements. Further, the protrusions of the two accessory elements respectively insert into the lateral grooves of the two gripper elements.

The snap coupling may be executed by a snap geometry provided with the two accessory elements and the insertion coupling may be executed by insertion geometry provided with the two accessory elements. The positioning of the snap geometry and the insertion geometry may be positioned interchangeable on two opposing sides of the accessory element respectively the gripping element.

Advantageously, the coupling between the two gripper elements and the two accessory elements may be quick and easy to assemble and disassemble. Further, there may be increased holding of the two accessory elements to the gripper head. The gripper assembly may provide a convenient solution to pick up and keep collected more than one object within one gripping movement. According to an exemplary embodiment of the invention, the handle may actuate the two gripper elements and the corresponding attached two accessory elements. Particularly, the movement of the two gripper elements translates into the movement of the two accessory elements.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a side perspective view of a gripper assembly, in accordance with an exemplary embodiment of the present disclosure;
**FIG. 2** illustrates a side perspective view of a gripper head with two gripper elements in a closed position, in accordance with an exemplary embodiment of the present disclosure;
**FIG. 3** illustrates a side perspective view of a gripper head with two gripper elements in an open position, in accordance with an exemplary embodiment of the present disclosure;
**FIG. 4** illustrates a side view of a first coupling structure formed on a back end of a gripper element and a second coupling structure formed on a front end of the gripper element, in accordance with an exemplary embodiment of the present disclosure;
**FIG. 5** illustrates a side view of a first coupling structure formed on a front end of a gripper element and the second coupling structure formed on a back end of the gripper element, in accordance with an exemplary embodiment of the present disclosure;
**FIG. 6** illustrates a side view of a removable coupling between two gripper elements and two accessory elements in the open position, in accordance with an exemplary embodiment of the present disclosure;
**FIG. 7** illustrates a top view of a gripper assembly, in accordance with an exemplary embodiment of the present disclosure;
**FIG. 8** illustrates a top view of a gripper assembly with an accessory element removed or uncoupled from a gripper element, in accordance with an exemplary embodiment of the present disclosure;
**FIG. 9** illustrates top view of an accessory element, in accordance with an exemplary embodiment of the present disclosure;
**FIG. 10** illustrates a side view of an accessory element, in accordance with an exemplary embodiment of the present disclosure;
**FIG. 11** illustrates a bottom view of an accessory element, in accordance with an exemplary embodiment of the present disclosure;
**FIG. 12** illustrates a gripper assembly with two accessory elements mounted to a storage clamp, in accordance with an exemplary embodiment of the present disclosure; and
**FIG. 13** illustrates a gripper assembly without two accessory elements mounted to a storage clamp, in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

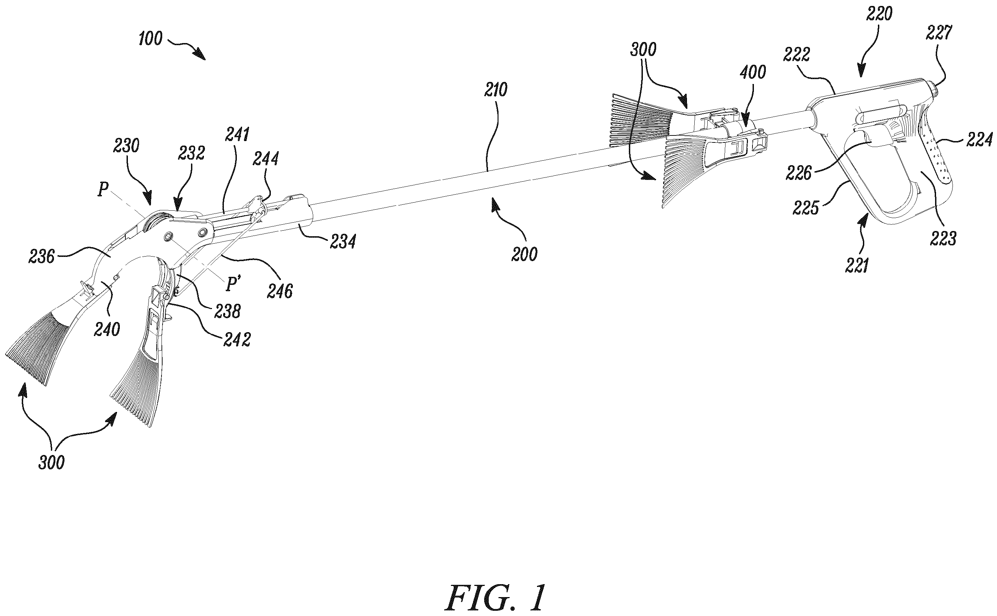

**FIG. 1** illustrates a gripper assembly **100** according to an exemplary embodiment of the present invention. The gripper assembly **100** includes a gripper device **200,** at least one accessory element **300,** and a storage clamp **400.** The gripper device **200** and the at least one accessory element **300** are removably coupled to each other. The gripper device **200** includes a shaft **210,** a gripper head **230** attached to one side of the shaft **210,** and a handle **220** attached to another end of the shaft **210** opposite to the gripper head **230.** The storage clamp **400** is removably coupled to the shaft **210** such that the storage clamp **400** is configured to removably couple the at least one accessory element **300** for storage when the at least one accessory element **300** is not in use.

Further, the shaft **210,** the gripper head **230,** and the handle **220** of the gripper device **200** work in conjunction to perform various intended applications of the gripper assembly **100.** The handle **220** of the gripper device **200** is configured to actuate the gripper head **230.** The handle **220** includes a body **221.** The body **221** includes a top portion **222.** The top portion **222** includes a connection mechanism (not shown) to couple the shaft **210** with the handle **220.** The body **221** further includes a back portion **223.** The back portion **223** is the portion of the handle **220** that may be grabbed by a user. The back portion **223** includes a grip portion **224** for providing better hold and safe working of the gripper device **200.** The top portion **222** is substantially perpendicular to the back portion **223.** The body **221** further includes a front portion **225** that is coupled to the top portion **222** as well as the back portion **223** such that an empty space is formed between the top portion **222,** the back portion **223,** and the front portion **225.**

Further, the body **221** includes a trigger element **226.** The trigger element **226** is configured to actuate the gripper head **230.** The user may grab the back portion **223** of the handle **220** and press the trigger element **226** with an index finger to ergonomically actuate the gripper head **230.** The body **221,** particularly the top portion **222** includes a lock button **227.**

With continued reference to **FIG. 1****,** the gripper head **230** includes a frame **232.** The frame **232** includes a tubular portion **234.** The tubular portion **234** is coupled to a first arm **236** and a second arm **238.** The first arm **236** is immovably coupled to the tubular portion **234** whereas the second arm **238** is pivotably coupled to the tubular portion **234.** The second arm **238** is pivotable about a pivot axis **P-P'.** The first arm **236** comprises a gripper element **240,** particularly a first gripper element **240.** Further, the second arm **238** comprises a gripper element **242,** particularly a second gripper element **242.** The tubular portion **234** further includes a slider **244.** When the user presses the trigger element **226,** due to a rotational movement of the second arm **238** respectively the closing movement of the first arm **236** and the second arm **238,** the slider **244** may move closer to the first arm **236** and the second arm **238.** The slider **244** is slidable coupled to the second arm **238.** By rotating, particularly manually rotating, a spike element **241** around the pivot axis **P-P',** the spike element **241** may be brought in a working position in which the spike element **241** extends substantially in the direction of the first arm **236** and may be used for spiking, e.g., garbage or leaves.

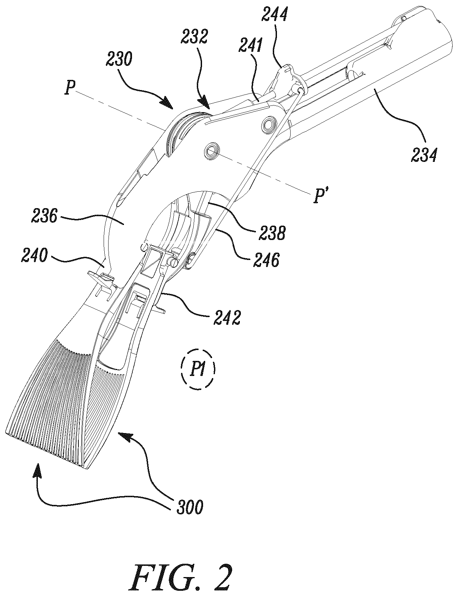

**FIG. 2** illustrates a side perspective view of a gripper head **230** with a first gripper element **240** coupled to the first arm **236,** and a second element **242** coupled to the second arm **238** in a closed position, in accordance with an exemplary embodiment of the present disclosure. The two gripper elements **240** and **242** are configured to interact with each other for gripping. When the two gripper elements **240** and **242** are interacting with each other, they are said to be in a working position **"P1"** respectively in the closed position "**P1**". The working position **"P1"** may be achieved by pressing the trigger element **226** such that the second arm **238** may pivot or rotate about the pivot axis **P-P'** towards the first arm **238** such that the first gripper element 240 and the second gripper element **242** may functionally interact to grip an item. Further, the working position **"P1"** may be locked as per requirement by using a locking mechanism (not shown).

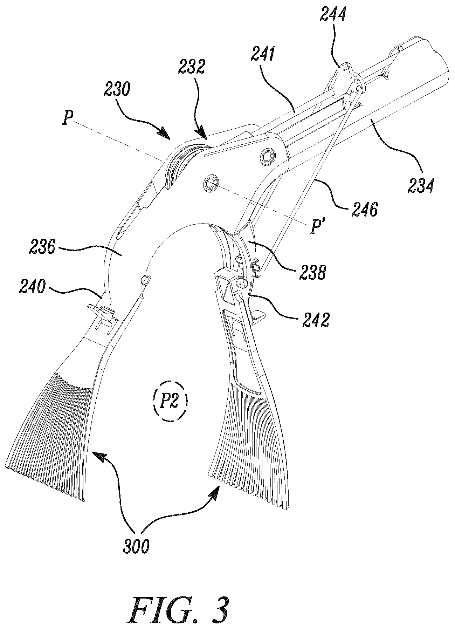

**FIG. 3** illustrates a side perspective view of a gripper head **230** with two gripper elements **240, 242** in an open position **"P2"** respectively a non-working position **"P2"** of the two gripper elements **240** and **242.** When the two gripper elements **240** and **242** are not in interaction with each other, they are said to be in the non-working position **"P2"** respectively the open position **"P2".** The non-working position **"P2"** may be achieved by releasing the trigger element **226** such that the second arm **238** may pivot or rotate about the pivot axis **P-P'** to release interaction with the first arm **236.** Hence, the second gripper element **242** also releases interaction with the first gripper element **240.** Further, the non-working position **"P2"** may be locked as per requirement by using the locking mechanism (not shown).

Referring again to **FIG. 1****,** the gripper device **200** and the at least one accessory element **300** of the gripper assembly **100** are removably coupled to each other. In other words, the at least one accessory element **300** is removably coupled to at least one of the two gripper elements **240, 242** of the gripper head **230.** Particularly, as exemplarily shown in **FIG. 1****,** a first accessory element **300** is removably coupled to the first gripper element **240,** a second accessory element **300** is removably coupled to the second gripper element **242,** as well as a third accessory element **300** and a fourth accessory element **300** are coupled to the storage clamp **400.**

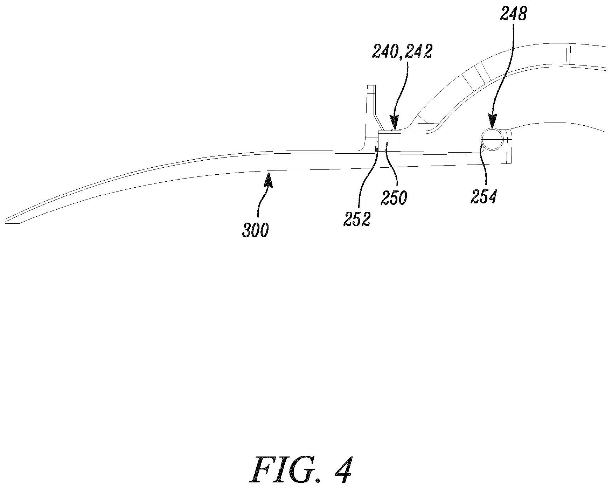

**FIG. 4** illustrates the removable coupling between one accessory element **300** and one of the two gripper elements **240, 242.** The gripper element **240, 242** includes a first coupling structure **248** and a second coupling structure **250.** The first coupling structure **248** and the second coupling structure **250** are configured to removably couple the accessory element **300** to the gripper element **240, 242.**

The first coupling structure **248** is configured to position the accessory element **300** relative to the gripper element **240, 242** in a defined manner. The first coupling structure **248** is further configured to rotate the accessory element **300** relative to the gripper element **240, 242.** Further, the second coupling structure **250** is configured to immovably lock the accessory element **300** relative to the gripper element **240, 242.**

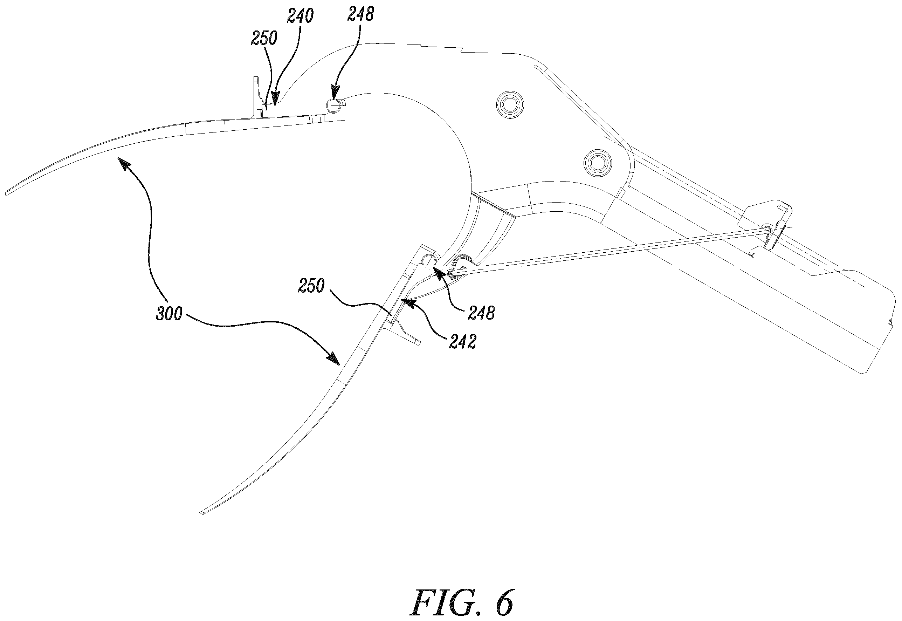

Further, the first coupling structure **248** and the second coupling structure **250** are formed separately from each other. Further, **FIG. 4** illustrates the first coupling structure **248** formed on a back end **254** of the gripper element **240, 242,** and the second coupling structure **250** formed on a front end **252** of the gripper element **240, 242.** As shown in **FIG. 4****,** the first coupling structure **248** is formed as two lateral grooves **260** (shown in **FIG. 6**) and the second coupling structure **250** is formed as a snap protrusion **250** extending at the front end **252** of the gripper element **240, 242.**

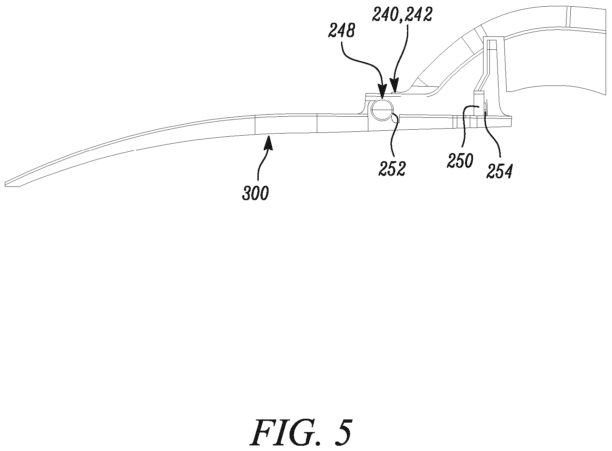

**FIG. 5** illustrates the first coupling structure **248** formed on the front end **252** of the gripper element **240. 242,** and the second coupling structure **250** formed on the back end **254** of the gripper element **240, 242.** The positions of the first coupling structure **248** and the second coupling structure **250** may depend upon the design of the accessory element **300** and the design of the gripper element **240, 242.** The first coupling structure **248** formed on the front end **252,** is formed as the two lateral grooves **260** (shown in **FIG. 6**). The second coupling structure **250** formed at the back end **254,** is formed as the snap protrusion **250.**

**FIG. 6** illustrates a side view of a removable coupling between two gripper elements **240** and **242** and two accessory elements **300** in the open position **"P2"** respectively the non-working position **"P2".** The at least one accessory element **300** may include a rake, a soft fan rake, a shovel and/or a broom. However, in **FIG. 6****,** the at least one accessory element **300** is two similar accessory elements **300.** The two similar accessory elements **300** are two rakes.

Each of the two gripper elements **240, 242** include the first coupling structure **248** and the second coupling structure **250.** Further, each of the two gripper elements **240, 242** is configured to removably couple a respective accessory element **300** to the gripper elements **240, 242.** The two gripper elements **240, 242** by virtue of the respective first coupling structure **248** and the second coupling structure **250** are removably coupled to the accessory elements **300.** The accessory elements **300** may work in combination to perform the intended application.

For ease of understanding of the present disclosure, the removable coupling between the first gripper element **240** and a first accessory element **300** coupled to the first gripper element **240,** will be explained further and the same will be regarded true for the removable coupling between the second gripper element **242** and a second accessory element **300** coupled to the second gripper element **242.**

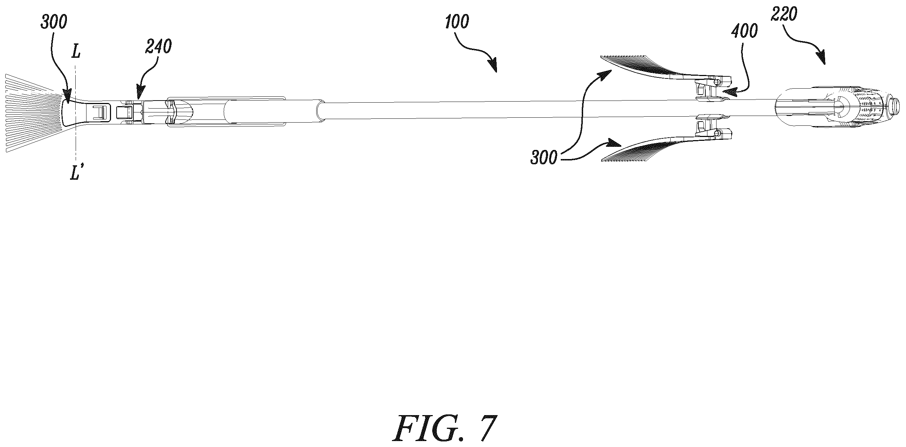

**FIG. 7** illustrates a top view of a gripper assembly **100** illustrates a top view of a gripper assembly **100,** wherein the removable coupling between the first gripper element **240** and the accessory element **300** is visible. Additionally, two accessory elements **300** are coupled to the storage clamp **400.**

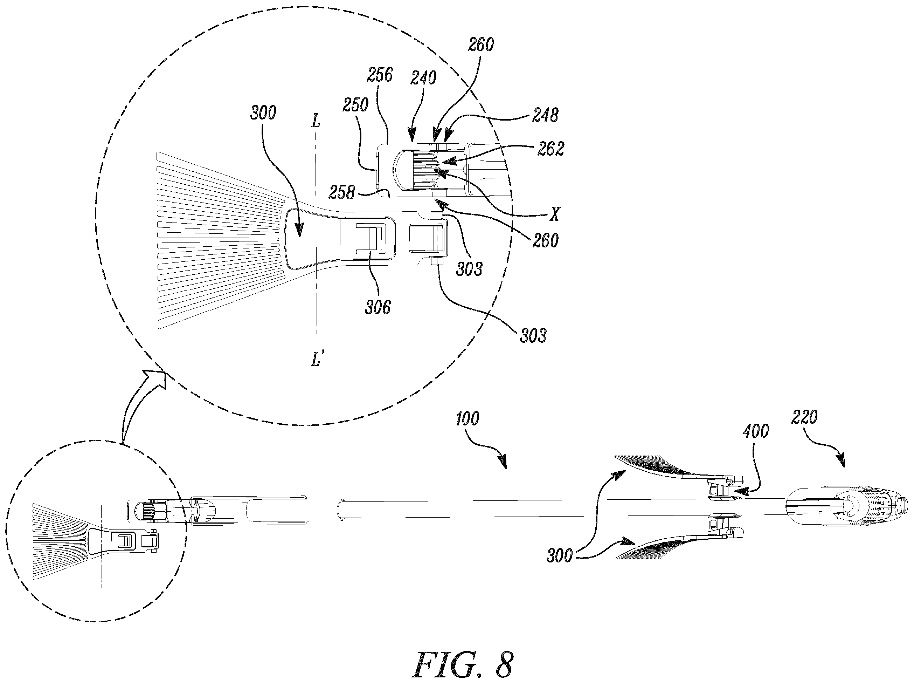

**FIG. 8** illustrates a top view of a gripper assembly **100** with an accessory element **300** removed or uncoupled from a first gripper element **240.** The first coupling structure **248** of the gripper element **240** is configured to position the gripper element **240** and the accessory element **300** relative to each other such that a lateral position **"X"** between the gripper element **240** and the accessory element **300** is defined. The lateral position **"X"** is a position seen in a direction parallel to a lateral axis **L-L'** illustrated in **FIG. 8** with reference to the accessory element **300.** The lateral position **"X"** shown in **FIG. 8** may be seen as the position of contact between the gripper element **240** and the accessory element **300** that extends between two opposing lateral sides **256** and **258.** The two opposing lateral sides **256** and **258** of the gripper element **240** are equidistant relative to the handle **220** respectively the shaft **210.**

Further, the first coupling structure **248** of the gripper element **240** is configured to position the gripper element **240** and the accessory element **300** relative to each other such that a lateral movement between the gripper element **240** and the accessory element **300** is substantially inhibited, i.e., there is no movement of the gripper element **240** and the accessory element **300** relative to each other in the direction parallel to the direction of the lateral axis **L-L'** upon coupling in a removable manner.

Further, the first coupling structure **248** includes two lateral grooves **260,** in particular with a round cross-section. Each of the two lateral grooves **260** extends inwardly from one of two opposing lateral sides **256, 258** of the gripper element **240.** Therefore, as shown in **FIG. 8****,** the one lateral groove **260** extends inwardly from the lateral side **256** and the other lateral groove **260** extends inwardly from the lateral side **258.** Further, a recess **262** is formed to connect the two lateral grooves **260.** Further, the two lateral grooves **260** are configured to insert a respective lateral protrusion **303** of the accessory element **300.** Further, the two lateral grooves **260** are configured to allow a rotation of the accessory element **300** relative to the gripper element **240** in the defined manner. Further, the recess **262** is configured to define the lateral position **"X"** of the accessory element **300** relative to the gripper element **240.**

With continued reference to **FIG. 8****,** the second coupling structure **250** includes a snap protrusion **250** configured to provide a counter bearing for a corresponding snap lever **306** of the accessory element **300.** The snap protrusion **250** is further configured to immovably lock the accessory element **300** relative to the gripper element **240.** The snap protrusion **250** may be a male coupling element that is inserted into the snap lever **306** or a female coupling element for quick, removable, and immovable coupling between the gripper element and the accessory element.

Each of the first coupling structure **248** and the second coupling structure **250** removably couples with the accessory element **300** by virtue of corresponding coupling structures **303, 306** provided with the accessory element **300.**

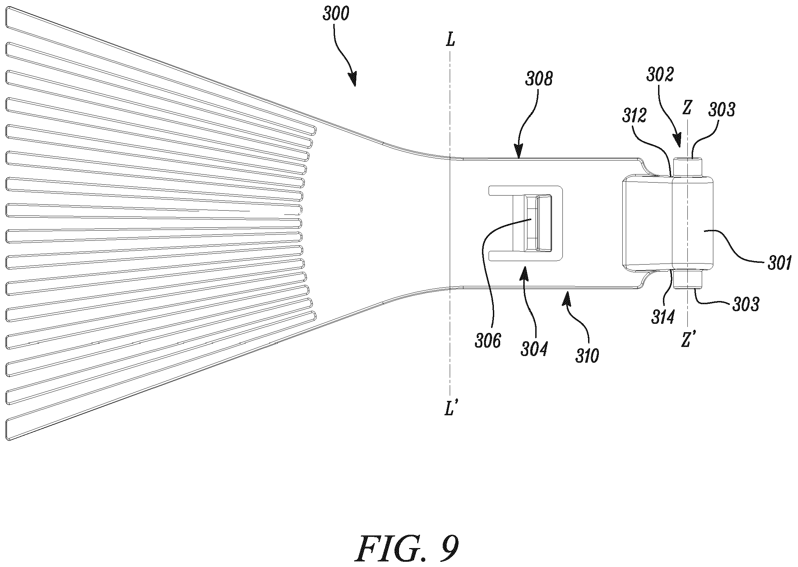

**FIG. 9** illustrates top view of an accessory element **300** comprising a third coupling structure **302** and a fourth coupling structure **304,** wherein the third coupling structure **302** is configured to functionally interact with the first coupling structure **248** and the fourth coupling structure **304** is configured to functionally interact with the second coupling structure **250.** The accessory element **300** includes the third coupling structure **302** configured to functionally interact with the first coupling structure **248** of the gripper element **240** such that the gripper element **240** and the accessory element **300** are positionable relative to each other in the defined manner, and such that the accessory element **300** is rotatable relative to the gripper element **240.** The rotation is along the axis **Z-Z'.** The axis **Z-Z'** extends parallel to the lateral axis **L-L'.**

The third coupling structure **302** comprises two lateral protrusions **303,** in particular each having a circular cross-section, each extending away from one of two opposing lateral sides **308, 310** of the accessory element **300.** The two opposing lateral sides **308, 310** are opposite to each other seen along a direction parallel to the lateral axis **L-L'** of the accessory element **300.** The two lateral protrusions **303** extend along the axis **Z-Z'.** Each of the two lateral protrusions **303** is configured to be insertable into a respective one of the two lateral grooves **260** of the gripper element **240.**

The third coupling structure **302** further includes a lateral positioning part **301** configured to functionally interact with the recess **262** of the gripper element **240.** The lateral positioning part **301** includes two opposing lateral sides **312** and **314.** The two opposing lateral sides **312** and **314** of the lateral positioning part **301** are the two opposing sides of the third coupling structure **302** that are positioned equidistant from the handle **220** of the gripper assembly **100,** when the accessory element **300** is mounted to the gripper element **240, 242.**

Further, the accessory element **300** includes the fourth coupling structure **304** configured to functionally interact with the second coupling structure **250** of the gripper element **240, 242** such that the accessory element **300** is immovably lockable relative to the gripper element **240.** The fourth coupling structure **304** comprises the snap lever **306** configured to engage the snap protrusion **250** or the second coupling structure **250** of the gripper element **240.**

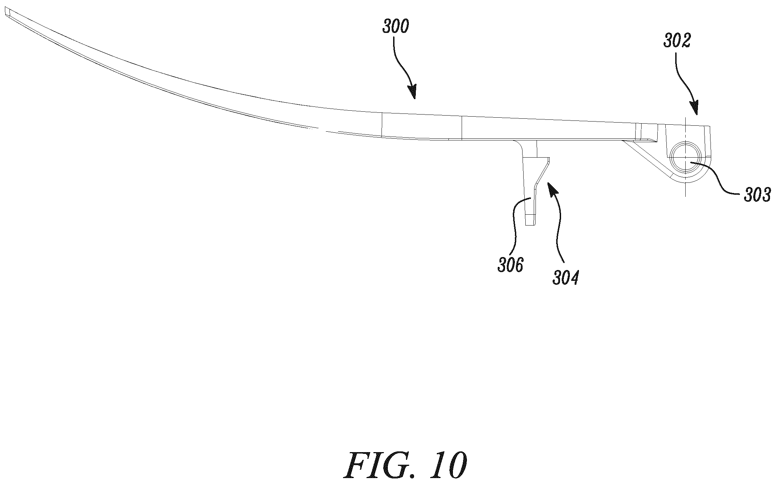

**FIG. 10** illustrates a side view of the accessory element **300.** The accessory element **300** includes the third coupling structure **302** comprising two lateral protrusions **303** (from which solely one lateral protrusion **303** is visible in **FIG. 10**) and the fourth coupling structure **304** comprising the snap lever **306.**

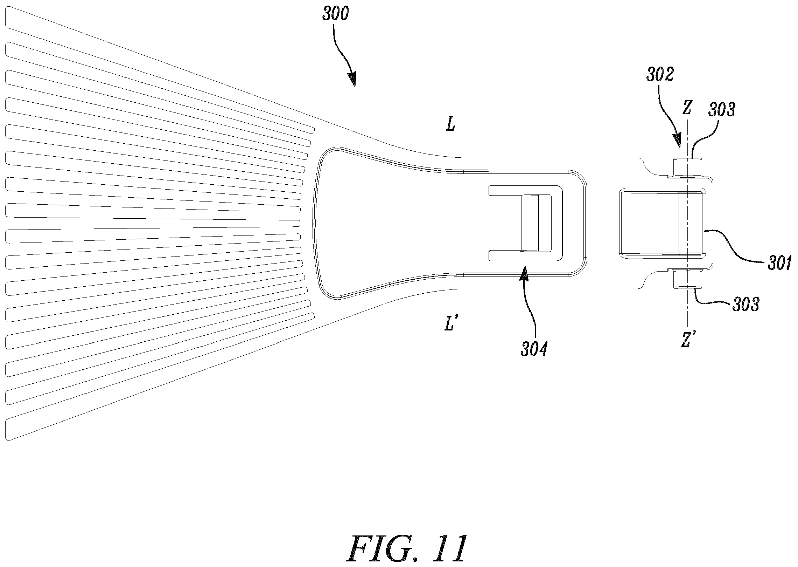

**FIG. 11** illustrates a bottom view of an accessory element **300.** The accessory element **300** comprises the third coupling structure **302** formed as two lateral protrusions **303** and the lateral positioning part **301.** The two lateral protrusions **303** extend in opposite direction along the axis **Z-Z'.** Further, the accessory element **300** includes the fourth coupling structure **304.**

Referring again to **FIGS. 8** and **9****,** when the accessory element **300** is removably coupled to the gripper element **240,** the lateral positioning part **301** is inserted into the recess **262.** Further, each of the two lateral protrusions **303** is inserted in the respective one of the two lateral grooves **260,** and the snap lever **306** is snap connected to the snap protrusion **250.**

Further, to provide the storage of the accessory element **300** during non-use of the accessory element **300,** the gripper assembly **100** includes the storage clamp **400.**

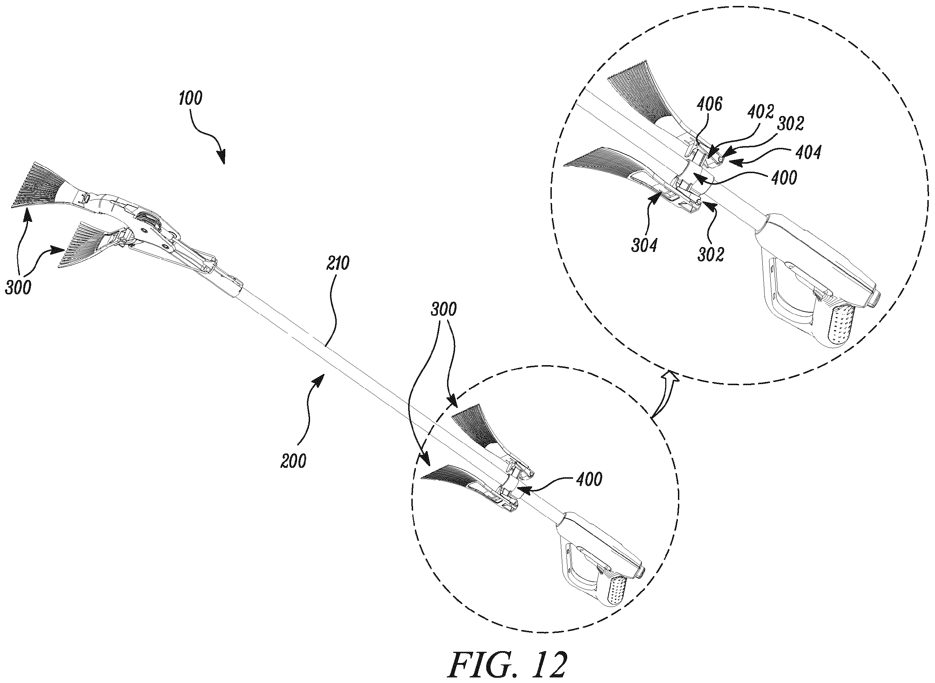

**FIG. 12** a gripper assembly **100** comprising two accessory elements **300** mounted to a storage clamp **400.** Further, the gripper assembly **100** comprises one further accessory element **300** mounted to the first gripper element **240** and another further accessory element **300** mounted to the second gripper element **242.** The storage clamp **400** is configured to be a separate and removable part and thus the storage clamp **400** may be removed from the shaft **210.**

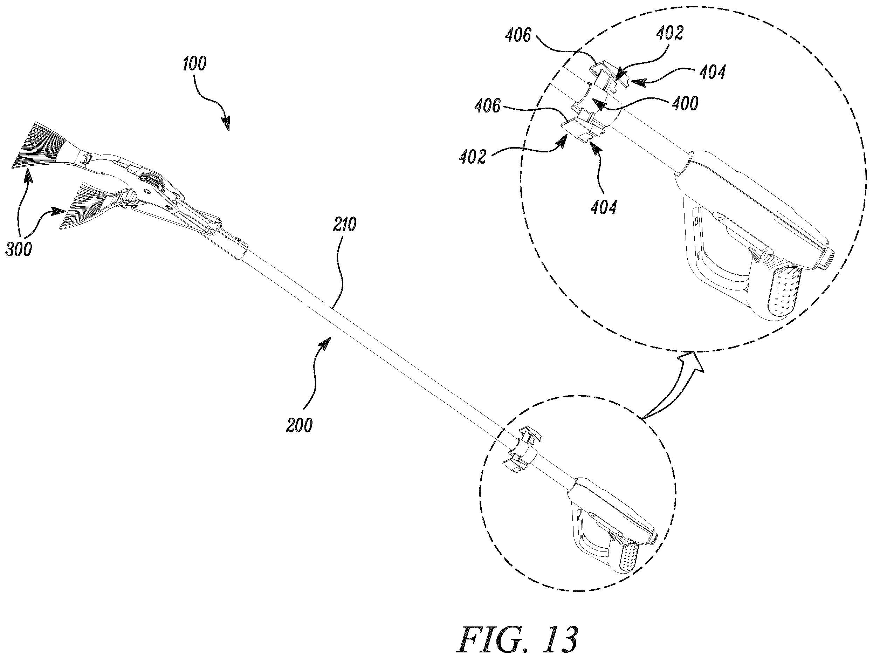

**FIG. 13** illustrates a gripper assembly **100** without two accessory elements **300** mounted to a storage clamp **400** according to an exemplary embodiment of the invention. The storage clamp **400** includes two opposite storage elements **402.** The two opposite storage elements **402** are formed similar to each other. Each of the two storage elements **402** includes a further first coupling structure **404** and a further second coupling structure **406.** Thereby, each of the two storage elements **402** is configured to couple a respective accessory element **300** for storage during non-use. The further first coupling structure **404** is formed substantially similar to the first coupling structure **248.** In other words, the further first coupling structure **404** comprises two lateral grooves connected by a recess. The further second coupling structure **406** is formed substantially similar to the second coupling structure **250.** In other words, the further second coupling structure **406** comprises a snap protrusion.

Referring again to **FIG. 12****,** for storage of the accessory element **300** at the storage clamp **400,** the further first coupling structure **404** of the storage clamp **400** is removably coupled with the third coupling structure **302** of the accessory element **300,** and the further second coupling structure **406** is removably coupled with the fourth coupling structure **304** of the accessory element **300.**

Thus, the present disclosure provides a versatile gripper assembly **100** that is ergonomic, easy to use, efficient, and simple in construction. The gripper assembly **100** performs conventional applications, such as, picking up objects, effectively and efficiently and additional applications, such as, the raking, cleaning, shoveling, and the like.

### LIST OF ELEMENTS

- **100**: gripper assembly
- **200**: gripper device
- **210**: shaft
- **220**: handle
- **221**: body
- **222**: top portion
- **223**: back portion
- **224**: grip portion
- **225**: front portion
- **226**: trigger element
- **227**: lock button
- **230**: gripper head
- **232**: frame
- **234**: tubular portion
- **236**: first arm
- **238**: second arm
- **240**: first gripper element
- **241**: spike element
- **242**: second gripper element
- **244**: slider
- **246**: coupling element
- **248**: first coupling structure
- **250**: second coupling structure / snap protrusion
- **252**: front end
- **254**: back end
- **256, 258**: two opposing lateral sides
- **260**: lateral groove
- **262**: recess
- **300**: accessory element
- **301**: lateral positioning part
- **302**: third coupling structure
- **303**: lateral protrusion
- **304**: fourth coupling structure
- **306**: snap Lever
- **308, 310**: two opposing lateral sides
- **312, 314**: two opposing lateral sides
- **400**: storage clamp
- **402**: storage element
- **404**: further first coupling structure
- **406**: further second coupling structure
- **P1**: closed position / working Position
- **P2**: open position / non-working position
- **P-P'**: pivot axis
- **L-L'**: lateral axis
- **Z-Z'**: axis
- **X**: lateral position

## Claims

1. A gripper device (**200**) comprising
a shaft (**210**),
a gripper head (**230**) attached to one end of the shaft (**210**),
a handle (**220**) attached to another end of the shaft (**210**) opposite to the gripper head (**230**), and configured to actuate the gripper head (**230**),
wherein the gripper head (**230**) comprises two gripper elements (**240, 242**) configured to interact with each other for gripping,
wherein at least one of the two gripper elements (**240, 242**) comprises a first coupling structure (**248**) and a second coupling structure (**250**),
wherein the first coupling structure (**248**) and the second coupling structure (**250**) are configured to removably couple an accessory element (**300**) to the gripper element (**240, 242**),
wherein the first coupling structure (**248**) is configured to position the accessory element (**300**) relative to the gripper element (**240, 242**) in a defined manner,
wherein the first coupling structure (**248**) is further configured to rotate the accessory element (**300**) relative to the gripper element (**240, 242**), and
wherein the second coupling structure (**250**) is configured to immovably lock the accessory element (**300**) relative to the gripper element (**240, 242**), and
the first coupling structure (**248**) and the second coupling structure (**250**) are formed separately from each other,
**characterised in that**
one of the first coupling structure (**248**) and the second coupling structure (**250**) is formed on a front end (**252**) of the gripper element (**240, 242**), and another one of the first coupling structure (**248**) and the second coupling structure (**250**) is formed on a back end (**254**) of the gripper element (**240, 242**)**.**

2. The gripper device (**200**) according to claim **1,**
wherein each of the two gripper elements (**240, 242**) comprises the first coupling structure (**248**) and the second coupling structure (**250**), and
wherein each of the two gripper elements (**240, 242**) is configured to removably couple a respective accessory element (**300**) to the gripper element (**240, 242**)**.**

3. The gripper device (**200**) according to any one of the preceding claims, wherein the first coupling structure (**248**) is configured to position the gripper element (**240, 242**) and the accessory element (**300**) relative to each other such that a lateral position (**X**) between the gripper element (**240, 242**) and the accessory element (**300**) is defined and a lateral movement between the gripper element (**240, 242**) and the accessory element (**300**) is substantially inhibited.

4. The gripper device (**200**) according to any one of the preceding claims, wherein the first coupling structure (**248**) comprises two lateral grooves (**260**), in particular with a round cross-section, each extending inwardly from one of two opposing lateral sides (**256, 258**) of the gripper element (**240, 242**), and a recess (**262**) formed to connect the two lateral grooves (**260**),
wherein the two lateral grooves (**260**) are configured to insert a respective lateral protrusion (**303**) of the accessory element (**300**), and configured to rotate the accessory element (**300**) relative to the gripper element (**240**, **242**) in the defined manner, and
wherein the recess (**262**) is configured to define a lateral position (**X**) of the accessory element (**300**) relative to the gripper element (**240, 242**).

5. The gripper device (**200**) according to any one of the preceding claims, wherein the second coupling structure (**250**) comprises a snap protrusion (**250**) configured to provide a counter bearing for a corresponding snap lever (**306**) of the accessory element (**300**), and
wherein the snap protrusion (**250**) is further configured to immovably lock the accessory element (**300**) relative to the gripper element (**240**, **242**).

6. The gripper device (**200**) according to any one of the preceding claims, further comprising a storage clamp (**400**), in particular mounted to the shaft (**210**),
wherein the storage clamp (**400**) is configured to removably couple the accessory element (**300**) for storing during non-use,
wherein the storage clamp (**400**) comprises two opposite storage elements (**402**), wherein each of the two storage elements (**402**) comprises a further first coupling structure (**404**) and a further second coupling structure (**406**), wherein each of the two storage elements (**402**) is configured to store the accessory element (**300**) during non-use,
wherein the further first coupling structure (**404**) is formed substantially similar to the first coupling structure (**248**) and the further second coupling structure (**406**) is formed substantially similar to the second coupling structure (**250**), and wherein in particular the storage clamp (**400**) is configured to be a separate and removable part.

7. A gripper assembly (**100**) comprising
a gripper device (**200**) according to any one of the preceding claims, and
at least one accessory element (**300**), in particular two accessory elements (**300**),
wherein the at least one accessory element (**300**) is removably coupled to at least one of the two gripper elements (**240, 242**).

8. The gripper assembly (**100**) according to claim **7,**
wherein the at least one accessory element (**300**) comprises a rake, a soft fan rake, a shovel and/or a broom.

9. The gripper assembly (**100**) according to claim **7** or **8,**
wherein the accessory element (**300**) comprises a third coupling structure (**302**) configured to functionally interact with the first coupling structure (**248**) of the gripper element (**240, 242**) such that the gripper element (**240, 242**) and the accessory element (**300**) are positionable relative to each other in the defined manner, and such that the accessory element (**300**) is rotatable relative to the gripper element (**240, 242**), and
wherein the accessory element (**300**) further comprises a fourth coupling structure (**304**) configured to functionally interact with the second coupling structure (**250**) of the gripper element (**240, 242**) such that the accessory element (**300**) is immovably lockable relative to the gripper element (**240, 242**).

10. The gripper assembly (**100**) according to any one of the claims 7 to 9, further including a storage clamp (**400**) being removably mounted to the shaft (**210**).

11. The gripper assembly (**100**) according to claim 10,
wherein the storage clamp (**400**) comprises two opposite storage elements (**402**),
wherein each of the two storage elements (**402**) comprises a further first coupling structure (**404**) and a further second coupling structure (**406**), wherein the two storage elements (**402**) are configured to store two accessory elements (**300**) during non-use,
wherein the further first coupling structure (**404**) is formed substantially similar to the first coupling structure (**248**) and the further second coupling structure (**406**) is formed substantially similar to the second coupling structure (**250**).

12. The gripper assembly (**100**) according to any one of the claims 7 to 11, wherein the third coupling structure (**302**) comprises two lateral protrusions (**303**), in particular comprising a circular cross-section, each extending away from one of two opposing lateral sides (**308, 310**) of the accessory element (**300**), wherein each of the two lateral protrusions (**303**) is configured to be insertable into a respective one of the two lateral grooves (**260**) of the gripper element (**240, 242**), and
wherein the third coupling structure (**302**) further comprises a lateral positioning part (**301)** configured to functionally interact with the recess (**262**) of the gripper element (**240, 242**).

13. The gripper assembly (**100**) according to any one of the claims 7 to 12, wherein the fourth coupling structure (**304**) comprises a snap lever (**306**) configured to engage the snap protrusion (**250**) of the gripper element (**240, 242**).

14. The gripper assembly (**100**) according to claims 12 and 13,
wherein when the accessory element (**300**) is removably coupled to the gripper element (**240, 242**), the lateral positioning part (**301**) is inserted into the recess (**262**), each of the two lateral protrusions (**303**) is inserted in a respective one of the two lateral grooves (**260**), and the snap lever (**306**) is snap connected to the snap protrusion (**250**).

## Patentansprüche

1. Greifervorrichtung **(200),** umfassend:
eine Welle **(210),**
einen Greiferkopf **(230),** der an einem Ende der Welle **(210)** befestigt ist,
ein Griff **(220),** der an einem anderen Ende der Welle **(210)** gegenüber dem Greiferkopf **(230)** befestigt ist und konfiguriert ist, um den Greiferkopf **(230)** zu betätigen,
wobei der Greiferkopf **(230)** zwei Greiferelemente **(240, 242)** umfasst, die konfiguriert sind, um zum Greifen miteinander zu interagieren,
wobei mindestens eines der zwei Greiferelemente **(240, 242)** eine erste Kopplungsstruktur **(248)** und eine zweite Kopplungsstruktur **(250)** umfasst,
wobei die erste Kopplungsstruktur **(248)** und die zweite Kopplungsstruktur **(250)** konfiguriert sind, um ein Zubehörelement **(300)** lösbar mit dem Greiferelement **(240, 242)** zu koppeln,
wobei die erste Kopplungsstruktur **(248)** konfiguriert ist, um das Zubehörelement **(300)** relativ zu dem Greiferelement **(240, 242)** in einer definierten Weise zu positionieren,
wobei die erste Kopplungsstruktur **(248)** ferner konfiguriert ist, um das Zubehörelement **(300)** relativ zu dem Greiferelement **(240, 242)** zu drehen, und
wobei die zweite Kopplungsstruktur **(250)** konfiguriert ist, um das Zubehörelement **(300)** relativ zu dem Greiferelement **(240, 242)** unbeweglich zu verriegeln, und die erste Kopplungsstruktur **(248)** und die zweite Kopplungsstruktur **(250)** getrennt voneinander ausgebildet sind,
**dadurch gekennzeichnet, dass**
eines von der ersten Kopplungsstruktur **(248)** und der zweiten Kopplungsstruktur **(250)** an einem vorderen Ende **(252)** des Greiferelements **(240, 242)** ausgebildet ist, und ein anderes von der ersten Kopplungsstruktur **(248)** und der zweiten Kopplungsstruktur **(250)** an einem hinteren Ende **(254)** des Greiferelements **(240, 242)** ausgebildet ist.

2. Greifervorrichtung (**200**) nach Anspruch 1,
wobei jedes der zwei Greiferelemente **(240, 242)** die erste Kopplungsstruktur **(248)** und die zweite Kopplungsstruktur **(250)** umfasst, und
wobei jedes der zwei Greiferelemente **(240, 242)** konfiguriert ist, um ein jeweiliges Zubehörelement **(300)** lösbar mit dem Greiferelement **(240, 242)** zu koppeln.

3. Greifervorrichtung **(200)** nach einem der vorstehenden Ansprüche,
wobei die erste Kopplungsstruktur **(248)** konfiguriert ist, um das Greiferelement **(240, 242)** und das Zubehörelement **(300)** relativ zueinander zu positionieren, so dass eine laterale Position **(X)** zwischen dem Greiferelement **(240, 242)** und dem Zubehörelement **(300)** definiert ist und eine laterale Bewegung zwischen dem Greiferelement **(240, 242)** und dem Zubehörelement **(300)** im Wesentlichen gehemmt ist.

4. Greifervorrichtung **(200)** nach einem der vorstehenden Ansprüche,
wobei die erste Kopplungsstruktur **(248)** zwei laterale Nuten **(260),** insbesondere mit einem runden Querschnitt, die sich jeweils von einer von zwei gegenüberliegenden lateralen Seiten **(256, 258)** des Greiferelements **(240, 242)** nach innen erstrecken, und eine Aussparung **(262),** die zur Verbindung der zwei lateralen Nuten **(260)** ausgebildet ist, umfasst,
wobei die zwei lateralen Nuten **(260)** konfiguriert sind, um einen jeweiligen lateralen Vorsprung **(303)** des Zubehörelements **(300)** einzusetzen und konfiguriert sind, um das Zubehörelement **(300)** relativ zu dem Greiferelement **(240, 242)** in der definierten Weise zu drehen, und
wobei die Aussparung **(262)** konfiguriert ist, um eine laterale Position **(X)** des Zubehörelements **(300)** relativ zu dem Greiferelement **(240, 242)** zu definieren.

5. Greifervorrichtung **(200)** nach einem der vorstehenden Ansprüche,
wobei die zweite Kopplungsstruktur **(250)** einen Schnappvorsprung **(250)** umfasst, der konfiguriert ist, um ein Gegenlager für einen entsprechenden Schnapphebel **(306)** des Zubehörelements **(300)** bereitzustellen und
wobei der Schnappvorsprung **(250)** ferner konfiguriert ist, um das Zubehörelement **(300)** relativ zu dem Greiferelement **(240, 242)** unbeweglich zu verriegeln.

6. Greifervorrichtung **(200)** nach einem der vorstehenden Ansprüche, ferner umfassend eine Aufbewahrungsklammer **(400),** insbesondere montiert an der Welle **(210),**
wobei die Aufbewahrungsklammer **(400)** konfiguriert ist, um das Zubehörelement **(300)** zur Aufbewahrung während der Nichtverwendung lösbar zu koppeln,
wobei die Aufbewahrungsklammer **(400)** zwei gegenüberliegende Aufbewahrungselemente **(402)** umfasst, wobei jedes der zwei Aufbewahrungselemente **(402)** eine weitere erste Kopplungsstruktur **(404)** und eine weitere zweite Kopplungsstruktur **(406)** umfasst, wobei jedes der zwei Aufbewahrungselemente **(402)** konfiguriert ist, um das Zubehörelement **(300)** während der Nichtverwendung aufzubewahren,
wobei die weitere erste Kopplungsstruktur **(404)** im Wesentlichen ähnlich der ersten Kopplungsstruktur **(248)** ausgebildet ist und die weitere zweite Kopplungsstruktur **(406)** im Wesentlichen ähnlich der zweiten Kopplungsstruktur **(250)** ausgebildet ist, und wobei insbesondere die Aufbewahrungsklammer **(400)** konfiguriert ist, um ein separates und lösbares Teil zu sein.

7. Greiferanordnung **(100),** umfassend
eine Greifervorrichtung **(200)** nach einem der vorstehenden Ansprüche und
mindestens ein Zubehörelement **(300),** insbesondere zwei Zubehörelemente **(300),**
wobei das mindestens eine Zubehörelement **(300)** mit mindestens einem der zwei Greiferelemente **(240, 242)** lösbar gekoppelt ist.

8. Greiferanordnung **(100)** nach Anspruch **7,**
wobei das mindestens eine Zubehörelement **(300)** einen Rechen, einen weichen Fächerrechen, eine Schaufel und/oder einen Besen umfasst.

9. Greiferanordnung **(100)** nach Anspruch **7** oder **8,**
wobei das Zubehörelement **(300)** eine dritte Kopplungsstruktur **(302)** umfasst, die konfiguriert ist, um funktional mit der ersten Kopplungsstruktur **(248)** des Greiferelements **(240, 242)** zu interagieren, so dass das Greiferelement **(240, 242)** und das Zubehörelement **(300)** relativ zueinander in der definierten Weise positionierbar sind und so dass das Zubehörelement **(300)** relativ zu dem Greiferelement **(240, 242)** drehbar ist und
wobei das Zubehörelement **(300)** ferner eine vierte Kopplungsstruktur **(304)** umfasst, die konfiguriert ist, um funktional mit der zweiten Kopplungsstruktur **(250)** des Greiferelements **(240, 242)** zu interagieren, so dass das Zubehörelement **(300)** relativ zu dem Greiferelement **(240, 242)** unbeweglich verriegelbar ist.

10. Greiferanordnung **(100)** nach einem der Ansprüche 7 bis 9, ferner umfassend eine Aufbewahrungsklammer **(400),** die lösbar an der Welle **(210)** montiert ist.

11. Greiferanordnung **(100)** nach Anspruch 10,
wobei die Aufbewahrungsklammer **(400)** zwei gegenüberliegende Aufbewahrungselemente **(402)** umfasst, wobei jedes der zwei Aufbewahrungselemente **(402)** eine weitere erste Kopplungsstruktur **(404)** und eine weitere zweite Kopplungsstruktur **(406)** umfasst, wobei die zwei Aufbewahrungselemente **(402)** konfiguriert sind, um die zwei Zubehörelemente **(300)** während der Nichtverwendung aufzubewahren,
wobei die weitere erste Kopplungsstruktur **(404)** im Wesentlichen ähnlich der ersten Kopplungsstruktur **(248)** ausgebildet ist und die weitere zweite Kopplungsstruktur **(406)** im Wesentlichen ähnlich der zweiten Kopplungsstruktur **(250)** ausgebildet ist.

12. Greifersystem **(100)** nach einem der Ansprüche 7 bis 11,
wobei die dritte Kopplungsstruktur **(302)** zwei laterale Vorsprünge **(303)** umfasst, insbesondere mit einem kreisförmigen Querschnitt, die sich jeweils von einer von zwei gegenüberliegenden lateralen Seiten **(308, 310)** des Zubehörelements **(300)** weg erstrecken, wobei jeder der zwei lateralen Vorsprünge **(303)** konfiguriert ist, um in eine jeweilige der zwei lateralen Nuten **(260)** des Greiferelements **(240, 242)** einsetzbar zu sein, und
wobei die dritte Kopplungsstruktur **(302)** ferner ein laterales Positionierungsteil **(301)** umfasst, das konfiguriert ist, um funktional mit der Aussparung **(262)** des Greiferelements **(240, 242)** zu interagieren.

13. Greiferanordnung **(100)** nach einem der Ansprüche 7 bis 12,
wobei die vierte Kopplungsstruktur **(304)** einen Schnapphebel **(306)** umfasst, der konfiguriert ist, um den Schnappvorsprung **(250)** des Greiferelements **(240, 242)** in Eingriff zu nehmen.

14. Greiferanordnung **(100)** nach Anspruch 12 und 13,
wobei, wenn das Zubehörelement **(300)** an das Greiferelement **(240, 242)** lösbar gekoppelt ist, das laterale Positionierungsteil **(301)** in die Aussparung **(262)** eingesetzt ist, jeder der zwei lateralen Vorsprünge **(303)** in eine jeweilige der zwei lateralen Nuten **(260)** eingesetzt ist, und der Schnapphebel **(306)** schnappverbunden mit dem Schnappvorsprung **(250)** ist.

## Revendications

1. Dispositif de préhension **(200)** comprenant
une tige **(210),**
une tête de préhension **(230)** fixée à une extrémité de la tige **(210),**
une poignée **(220)** fixée à une autre extrémité de la tige **(210)** opposée à la tête de préhension **(230),** et conçue pour actionner la tête de préhension **(230),**
dans lequel la tête de préhension **(230)** comprend deux éléments de préhension **(240, 242)** conçus pour interagir l'un avec l'autre pour la saisie,
dans lequel au moins l'un des deux éléments de préhension **(240, 242)** comprend une première structure d'accouplement **(248)** et une deuxième structure d'accouplement **(250),**
dans lequel la première structure d'accouplement **(248)** et la deuxième structure d'accouplement **(250)** sont conçues pour accoupler de manière amovible un élément accessoire **(300)** à l'élément de préhension **(240, 242),**
dans lequel la première structure d'accouplement **(248)** est conçue pour positionner l'élément accessoire **(300)** par rapport à l'élément de préhension **(240, 242)** d'une manière définie,
dans lequel la première structure d'accouplement **(248)** est en outre conçue pour faire tourner l'élément accessoire **(300)** par rapport à l'élément de préhension **(240, 242),** et
dans lequel la deuxième structure d'accouplement **(250)** est conçue pour verrouiller de manière immobile l'élément accessoire **(300)** par rapport à l'élément de préhension **(240, 242),** et la première structure d'accouplement **(248)** et la deuxième structure d'accouplement **(250)** sont formées séparément l'une de l'autre,
**caractérisé en ce que**
l'une de la première structure d'accouplement **(248)** et de la deuxième structure d'accouplement **(250)** est formée sur une extrémité avant **(252)** de l'élément de préhension **(240, 242),** et une autre de la première structure d'accouplement **(248)** et de la deuxième structure d'accouplement **(250)** est formée sur une extrémité arrière **(254)** de l'élément de préhension **(240, 242).**

2. Dispositif de préhension **(200)** selon la revendication **1,**
dans lequel chacun des deux éléments de préhension **(240, 242)** comprend la première structure d'accouplement **(248)** et la deuxième structure d'accouplement **(250),** et
dans lequel chacun des deux éléments de préhension **(240, 242)** est conçu pour accoupler de manière amovible un élément accessoire **(300)** respectif à l'élément de préhension **(240, 242).**

3. Dispositif de préhension **(200)** selon l'une quelconque des revendications précédentes,
dans lequel la première structure d'accouplement **(248)** est conçue pour positionner l'élément de préhension **(240, 242)** et l'élément accessoire **(300)** l'un par rapport à l'autre de telle sorte qu'une position latérale **(X)** entre l'élément de préhension **(240, 242)** et l'élément accessoire **(300)** est définie et qu'un mouvement latéral entre l'élément de préhension **(240, 242)** et l'élément accessoire **(300)** est sensiblement inhibé.

4. Dispositif de préhension **(200)** selon l'une quelconque des revendications précédentes,
dans lequel la première structure d'accouplement **(248)** comprend deux rainures latérales **(260),** en particulier avec une section transversale ronde, chacune s'étendant vers l'intérieur à partir de l'un des deux côtés latéraux opposés **(256, 258)** de l'élément de préhension **(240, 242),** et un évidement **(262)** formé pour relier les deux rainures latérales **(260),**
dans lequel les deux rainures latérales **(260)** sont conçues pour insérer une saillie latérale respective **(303)** de l'élément accessoire **(300),** et conçues pour faire tourner l'élément accessoire **(300)** par rapport à l'élément de préhension **(240, 242)** de la manière définie, et
dans lequel l'évidement **(262)** est conçu pour définir une position latérale **(X)** de l'élément accessoire **(300)** par rapport à l'élément de préhension **(240, 242).**

5. Dispositif de préhension **(200)** selon l'une quelconque des revendications précédentes,
dans lequel la deuxième structure d'accouplement **(250)** comprend une saillie d'encliquetage **(250)** conçue pour fournir un contre-palier pour un levier d'encliquetage **(306)** correspondant de l'élément accessoire **(300),** et
dans lequel la saillie d'encliquetage **(250)** est en outre conçue pour verrouiller de manière immobile l'élément accessoire **(300)** par rapport à l'élément de préhension **(240, 242).**

6. Dispositif de préhension **(200)** selon l'une quelconque des revendications précédentes, comprenant en outre une pince de stockage **(400),** en particulier montée sur la tige **(210),**
dans lequel la pince de stockage **(400)** est conçue pour accoupler de manière amovible l'élément accessoire **(300)** pour le stockage en cas de non-utilisation,
dans lequel la pince de stockage **(400)** comprend deux éléments de stockage **(402)** opposés, dans lequel chacun des deux éléments de stockage **(402)** comprend une autre première structure d'accouplement **(404)** et une autre deuxième structure d'accouplement **(406),** dans lequel chacun des deux éléments de stockage **(402)** est conçu pour stocker l'élément accessoire **(300)** en cas de non-utilisation,
dans lequel l'autre première structure d'accouplement **(404)** est formée sensiblement de manière similaire à la première structure d'accouplement **(248)** et l'autre deuxième structure d'accouplement **(406)** est formée sensiblement similaire à la deuxième structure d'accouplement **(250),** et dans lequel en particulier la pince de stockage **(400)** est conçue pour être une pièce séparée et amovible.

7. Ensemble de préhension **(100)** comprenant
un dispositif de préhension **(200)** selon l'une quelconque des revendications précédentes, et
au moins un élément accessoire **(300),** en particulier deux éléments accessoires **(300),**
dans lequel l'au moins un élément accessoire **(300)** est accouplé de manière amovible à au moins l'un parmi les deux éléments de préhension **(240, 242).**

8. Ensemble de préhension **(100)** selon la revendication 7,
dans lequel l'au moins un élément accessoire **(300)** comprend un râteau, un râteau à éventail souple, une pelle et/ou un balai.

9. Ensemble de préhension **(100)** selon la revendication 7 ou **8,**
dans lequel l'élément accessoire **(300)** comprend une troisième structure d'accouplement **(302)** conçue pour interagir fonctionnellement avec la première structure d'accouplement **(248)** de l'élément de préhension **(240, 242)** de sorte que l'élément de préhension **(240, 242)** et l'élément accessoire **(300)** peuvent être positionnés l'un par rapport à l'autre de la manière définie, et de telle sorte que l'élément accessoire **(300)** est rotatif par rapport à l'élément de préhension **(240, 242),** et
dans lequel l'élément accessoire **(300)** comprend en outre une quatrième structure d'accouplement **(304)** conçue pour interagir de manière fonctionnelle avec la deuxième structure d'accouplement **(250)** de l'élément de préhension **(240, 242)** de telle sorte que l'élément accessoire **(300)** est immobile et verrouillable par rapport à l'élément de préhension **(240, 242).**

10. Ensemble de préhension **(100)** selon l'une quelconque des revendications 7 à 9, comportant en outre une pince de stockage **(400)** montée de manière amovible sur la tige **(210).**

11. Ensemble de préhension **(100)** selon la revendication 10,
dans lequel la pince de stockage **(400)** comprend deux éléments de stockage **(402)** opposés, dans lequel chacun des deux éléments de stockage **(402)** comprend une autre première structure d'accouplement **(404)** et une autre deuxième structure d'accouplement **(406),** dans lequel les deux éléments de stockage **(402)** sont conçus pour stocker deux éléments accessoires **(300)** en cas de non-utilisation,
dans lequel l'autre première structure d'accouplement **(404)** est formée de manière sensiblement similaire à la première structure d'accouplement **(248)** et l'autre deuxième structure d'accouplement **(406)** est formée de manière sensiblement similaire à la deuxième structure d'accouplement **(250).**

12. Ensemble de préhension **(100)** selon l'une quelconque des revendications 7 à 11,
dans lequel la troisième structure d'accouplement **(302)** comprend deux saillies latérales **(303),** en particulier comprenant une section transversale circulaire, chacune s'étendant à l'écart de l'un des deux côtés latéraux opposés **(308, 310)** de l'élément accessoire **(300),** dans lequel chacune des deux saillies latérales **(303)** est conçue pour être insérée dans une rainure respective des deux rainures latérales **(260)** de l'élément de préhension **(240, 242),** et
dans lequel la troisième structure d'accouplement **(302)** comprend en outre une partie de positionnement latérale **(301)** conçue pour interagir de manière fonctionnelle avec l'évidement **(262)** de l'élément de préhension **(240, 242).**

13. Ensemble de préhension **(100)** selon l'une quelconque des revendications 7 à 12,
dans lequel la quatrième structure d'accouplement **(304)** comprend un levier d'encliquetage **(306)** conçu pour venir en prise avec la saillie d'encliquetage **(250)** de l'élément de préhension **(240, 242).**

14. Ensemble de préhension **(100)** selon la revendication 12 ou 13,
dans lequel, lorsque l'élément accessoire **(300)** est accouplé de manière amovible à l'élément de préhension **(240, 242),** la partie de positionnement latérale **(301)** est insérée dans l'évidement **(262),** chacune des deux saillies latérales **(303)** est insérée dans une rainure respective des deux rainures latérales **(260),** et le levier d'encliquetage (306) est relié par encliquetage à la saillie d'encliquetage **(250).**
